(19) Europäisches Patentamt
European Patent Office
Office européen des brevets

(11) **EP 4 607 284 A1**

(12) **EUROPEAN PATENT APPLICATION**

(43) Date of publication:
**27.08.2025 Bulletin 2025/35**

(21) Application number: **25154053.0**

(22) Date of filing: **27.01.2025**

(51) International Patent Classification (IPC):
**G03G 15/00** $^{(2006.01)}$    **G03G 21/20** $^{(2006.01)}$

(52) Cooperative Patent Classification (CPC):
**G03G 15/5004; G03G 15/80; G03G 21/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.02.2024 JP 2024026911**

(71) Applicant: **CANON KABUSHIKI KAISHA**
**Tokyo 146-8501 (JP)**

(72) Inventors:
• **KOIZUMI, Kazuhisa**
**Tokyo, 146-8501 (JP)**
• **HATA, Yosuke**
**Tokyo, 146-8501 (JP)**

(74) Representative: **TBK**
**Bavariaring 4-6**
**80336 München (DE)**

(54) **IMAGE PROCESSING APPARATUS AND HEAT GENERATION RESISTOR CIRCUIT**

(57)    There is provided an image processing apparatus (1, 10, 50) including: a first direct current power supply (221) configured to output a first voltage; a second direct current power supply (222) configured to output a second voltage that is higher than the first voltage; a resistor circuit section (200) including at least one heat generation resistor (201, 202, 203, 204) configured to heat inside of the image processing apparatus; and a control means (240, 250, 290) configured to switch a power supply to supply the resistor circuit section with power between the first direct current power supply and the second direct current power supply.

**F I G. 2**

**Description**

BACKGROUND OF THE INVENTION

Field of the Invention

The present invention relates to an image processing apparatus and a heat generation resistor circuit.

Description of the Related Art

There is a known technology in which, in a case where an image processing apparatus such as a printer or scanner is expected to be installed in a low-temperature environment, a heater is mounted in the apparatus to manage the temperature within the apparatus in order to prevent printing and operational defects due to a phenomenon resulting from a drop in temperature (for example, dew condensation). Since such an apparatus needs to keep the heater active while not running its primary operation, it is generally connected to an alternating current commercial power source to supply the heater with power.

Japanese Patent Laid-Open No. 2007-57779 discloses a technology for an image-forming apparatus having a heater and a fan for temperature control that converts an alternating current voltage from a commercial power source to a direct current voltage and uses the direct current voltage to operate the equipment within the apparatus. By adopting the configuration to provide the equipment for temperature control with the direct current voltage instead of the alternating current voltage as in the technology disclosed by Japanese Patent Laid-Open No. 2007-57779, it is possible to facilitate size reduction of the apparatus and efficient heating.

SUMMARY OF THE INVENTION

In general, loads in an image processing apparatus include control system loads such as processors (for example, CPUs) and driving system loads such as motors. By providing a second power supply for feeding the driving system loads separately from a first power supply for feeding the control system loads, it is possible to shut off the power feeding from the second power supply during a period when the driving system does not operate so as to reduce power consumption. As an operational voltage required for the control system is lower than a driving voltage for the driving system, the first power supply is usually configured to output a voltage lower than a voltage output from the second power supply. However, in a case where the first power supply is used to feed the heater that needs to be constantly kept active for the purpose of preventing dew condensation, there is a possibility that sufficient power is not supplied from the first power supply to the heater when the entire apparatus is highly loaded. Meanwhile, in a case where the second power supply is used to feed the heater, the power feeding from the second power supply cannot be shut off for power saving.

In light of the foregoing, the present invention aims to provide a mechanism that makes it possible for an image processing apparatus to supply sufficient power to a heater so as to prevent defects due to a drop in temperature while fulfilling the demand of power saving.

According to an aspect, there is provided an image processing apparatus as specified in claims 1 to 18.

According to another aspect, there is provided a heat generation resistor circuit as specified in claim 19.

According to another aspect, there is provided an image processing apparatus as specified in claim 20.

Further features of the present invention will become apparent from the following description of exemplary embodiments (with reference to the attached drawings).

BRIEF DESCRIPTION OF THE DRAWINGS

FIG. 1 is a schematic configuration diagram illustrating an example of a configuration of a multifunction peripheral according to an embodiment;
FIG. 2 is a circuit diagram illustrating a first embodiment example of a configuration of a circuit related to power supply control;
FIG. 3A is an explanatory diagram illustrating how resistors are connected in parallel in a first power supply mode;
FIG. 3B is an explanatory diagram illustrating how resistors are connected in series in a second power supply mode;
FIG. 4 is a flowchart illustrating an example of a flow of mode switching processing according to an embodiment;
FIG. 5 is a circuit diagram illustrating a second embodiment example of a configuration of a circuit related to power supply control;
FIG. 6A is an explanatory diagram illustrating how resistors are connected in a first power supply mode;

FIG. 6B is an explanatory diagram illustrating how resistors are connected in a second power supply mode; and FIG. 7 is a circuit diagram illustrating a modification example of a configuration of a circuit related to power supply control.

## DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

<1. Configuration Example of Multifunction Peripheral>

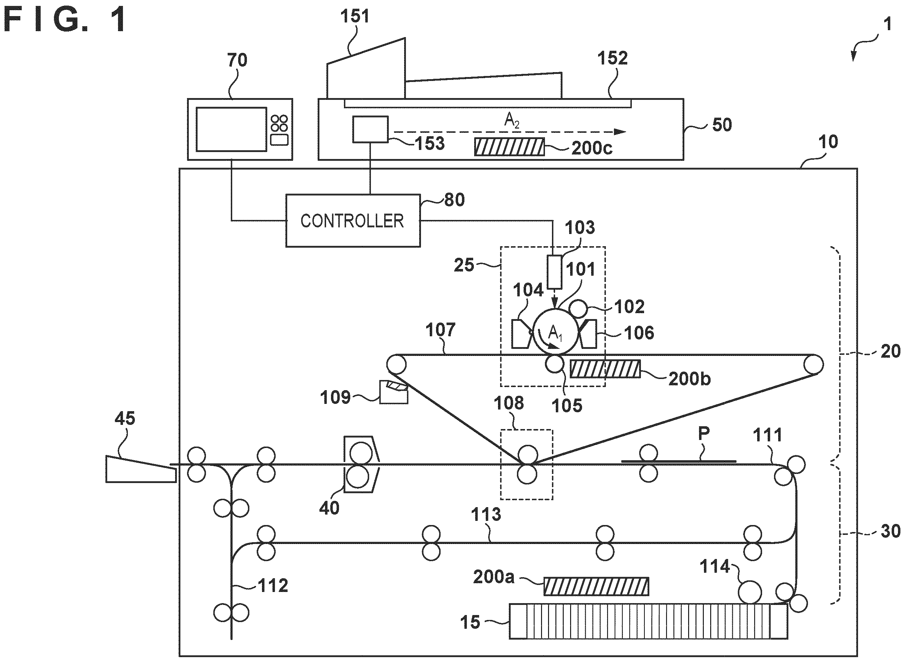

FIG. 1 is a schematic configuration diagram illustrating an example of a configuration of a multifunction peripheral 1 according to an embodiment. With reference to FIG. 1, the multifunction peripheral 1 includes a printer unit 10, a scanner unit 50, an operation unit 70, and a controller 80. Each of the multifunction peripheral 1, the printer unit 10 and the scanner unit 50 is an example of an image processing apparatus.

The printer unit 10 is an image forming apparatus that forms an image on a sheet. The printer unit 10 includes a paper feeding cassette 15, an image-forming unit 20, a conveyance unit 30, a fixing unit 40, and a discharge tray 45.

The image-forming unit 20 includes a process unit 25, an intermediate transfer belt 107, a secondary transfer unit 108, and a belt cleaner 109. For the sake of simplicity of descriptions, FIG. 1 shows an example where the image-forming unit 20 includes one process unit 25, however, the image-forming unit 20 may include four process units 25 corresponding to four color components of yellow, magenta, cyan, and black, respectively. That is, the printer unit 10 may be a monochrome printer or a color printer. The process unit 25 includes a photosensitive drum 101, a charging roller 102, a laser unit 103, a developing device 104, a primary transfer roller 105, and a drum cleaner 106.

The photosensitive drum 101 is an image carrier, and rotates in a direction indicated by an arrow $A_1$ in the figure. The charging roller 102 charges the surface of the photosensitive drum 101 to a uniform potential. The laser unit 103 has a semiconductor laser as a light source, and forms an electrostatic latent image on the surface of the photosensitive drum 101 by exposing the photosensitive drum 101 to a laser light in accordance with input image data. The developing device 104 develops the electrostatic latent image on the surface of the photosensitive drum 101 by supplying it with toner to form a toner image. The primary transfer roller 105 is applied with a transfer voltage that is a high voltage, and transfers the toner image on the surface of the photosensitive drum 101 to the intermediate transfer belt 107. The intermediate transfer belt 107 conveys the transferred toner image to a position of the secondary transfer unit 108.

The paper feeding cassette 15 is a container unit that contains a bundle of sheets. The conveyance unit 30 includes conveyance paths 111, 112, 113, a feeding roller 114, and a plurality of conveyance rollers. The feeding roller 114 picks up a sheet (also referred to as recording material) P one by one from the bundle of sheets contained in the paper feeding cassette 15 to feed it to the conveyance path 111. When the sheet P conveyed along the conveyance path 111 arrives at the secondary transfer position, the secondary transfer unit 108 transfers the toner image on the intermediate transfer belt 107 to the sheet P with a secondary transfer roller to which transfer voltage that is a high voltage is applied. The transfer voltage may be optimized depending on a type of the sheet P. The conveyance unit 30 may have a correction mechanism (not illustrated) that corrects skew of the sheet P on the conveyance path 111.

The drum cleaner 106 removes toner remaining on the surface of the photosensitive drum 101. The belt cleaner 109 removes toner remaining on the intermediate transfer belt 107.

The fixing unit 40 has a fixing roller pair, and fixes the toner image to the sheet P by heating and pressurizing the sheet P to which the toner image has been transferred. The sheet P that has passed through the fixing unit 40 is discharged to the discharge tray 45.

In a case where double-sided printing is performed, the sheet P is retreated into the conveyance path 112, and then reverses its traveling direction to enter the double-sided conveyance path 113. This sheet P returns to the conveyance path 111 with its front and rear surfaces inverted, and a toner image is transferred to the rear surface by the secondary transfer unit 108. The fixing unit 40 fixes again the toner image to the sheet P by heating and pressurizing the sheet P. Then, the sheet P is discharged to the discharge tray 45.

The scanner unit 50 is a reading apparatus that optically reads a document. The scanner unit 50 includes an automatic document feeder (ADF) 151, a platen 152, and an optical unit 153. The ADF 151 feeds a sheet constituting the document one by one to a conveyance path (not illustrated) within the scanner unit 50. The sheet may be placed on the platen 152 instead of being fed by the ADF 152. The optical unit 153 includes an optical system constituted by multiple lens and mirrors, an image sensor, and a signal processing circuit. The optical unit 153 is movable along the arrow $A_2$ in the figure. In a case where the ADF 151 is used, the optical unit 153 optically reads a sheet conveyed along the conveyance path and passing through a reading position to generate read image data. In a case where a sheet is placed on the platen 152, the optical unit 153 optically reads the sheet while moving along the arrow $A_2$ to generate read image data.

The operation unit 70 provides a user interface for the multifunction peripheral 1 to interact with a user. For example, the operation unit 70 may include input devices such as a touch panel, a button, a switch, and a microphone as well as output devices such as a display and a speaker.

The controller 80 includes a memory and a processor, and controls overall operations of the multifunction peripheral 1 described above by executing a computer program stored in the memory. For example, when execution of a print job is instructed, the controller 80 controls the printer unit 10 to form an image on a sheet based on input image data received from an external apparatus. When execution of a scan job is instructed, the controller 80 controls the scanner unit 50 to read a sheet, and stores read image data in a storage (not illustrated) or transmits it to a designated destination. When execution of a copy job is instructed, the controller 80 controls the scanner unit 50 to read a sheet, and controls the printer unit 10 to form an image on another sheet based on read image data.

In the present embodiment, the multifunction peripheral 1 further includes one or more resistor circuit section (hereinafter, also simply referred to as heaters) for heating inside of the apparatus. FIG. 1 illustrates an example where the multifunction peripheral 1 includes three heaters 200a, 200b and 200c. However, the multifunction peripheral 1 may include a smaller or larger number of heaters. The heater 200a is a first resistor circuit section for heating the paper feeding cassette 15. The heater 200a heats the paper feeding cassette 15 together with a sheet bundle therein so that a conveyance defect due to moisture on a sheet can be prevented. The heater 200b is a second resistor circuit section for heating the image-forming unit 20. The heater 200b heats the image-forming unit 20 so that an image formation defect due to dew condensation in the image-forming unit 20 (for example, the photosensitive drum 101) can be prevented. The heater 200c is a third resistor circuit section for heating the optical unit 153. The heater 200c heats the optical unit 153 so that a reading defect due to dew condensation in the optical unit 153 can be prevented.

Note that, in the following descriptions, in a case where it is not necessary to distinguish the heaters 200a, 200b and 200c from one another, they are collectively referred to as a heater 200 by omitting the character at the end of the reference numeral. The controller 80 controls supplying of power to the heaters as described below.

<2. First Embodiment Example>

<2-1. Circuit Configuration Related to Power Supply Control>

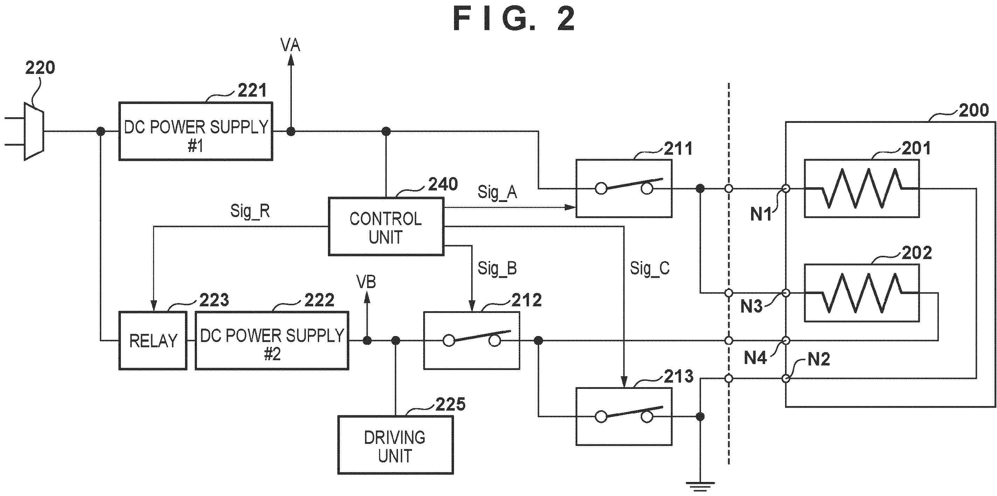

FIG. 2 is a circuit diagram illustrating a first embodiment example of a configuration of a circuit related to power supply control. In the first embodiment example, the multifunction peripheral 1 includes a first switch 211, a second switch 212, a third switch 213, a power supply plug 220, a first direct current (DC) power supply 221, a second DC power supply 222, a relay 223, a driving unit 225, and a control unit 240.

The resistor circuit section 200 is a heat generation resistor circuit arranged in the multifunction peripheral 1. The resistor circuit section 200 corresponds to at least one of the heaters 200a, 200b and 200c described using FIG. 1. The resistor circuit section 200 includes at least one heat generation resistor for heating inside of the printer unit 10 or the scanner unit 50, and two or more connection terminals. FIG. 2 illustrates an example where the resistor circuit section 200 includes a first resistor 201 and a second resistor 202 as well as four nodes N1 to N4. The nodes N1 to N4 receive power to be supplied to the first resistor 201 and the second resistor 202. One end of the first resistor 201 is connected to the node N1, and the other end to the node N2. One end of the second resistor 202 is connected to the node N3, and the other end to the node N4.

The first switch 211, the second switch 212 and the third switch 213 are switching circuits for switching a connection state of a power supply path among 'Connected (ON)' and 'Disconnected (OFF)'. For example, each switching circuit may be a mechanical relay or an electrical switching element (for example, a field-effect transistor (FET)). Each switching circuit may be accompanied by a diode for preventing a reverse current flow.

The first switch 211 opens and closes the power supply path between the first DC power supply 221 and the nodes N1 and N3. One end of the first switch 211 is connected to the nodes N1 and N3, and the other end of the first switch 211 is connected to an output terminal of the first DC power supply 221. The control unit 240 can switch the state of the first switch 211 by outputting a switching signal Sig_A to the first switch 211.

The second switch 212 opens and closes the power supply path between the second DC power supply 222 and the node N4. One end of the second switch 212 is connected to the node N4, and the other end to an output terminal of the second DC power supply 222. The control unit 240 can switch the state of the second switch 212 by outputting a switching signal Sig_B to the second switch 212.

The third switch 213 opens and closes the grounding path between the node N4 and the ground. One end of the third switch 213 is connected to the power supply path between the second switch 212 and the node N4, and the other end to the grounding path between the node N2 and the ground. The control unit 240 can switch the state of the third switch 213 by outputting a switching signal Sig_C to the third switch 213.

The power supply plug 220 is connected to a commercial power source that is an alternating current (AC) power source. The power from the commercial power source is supplied to the first DC power supply 221, and via the relay 223 to the second DC power supply 222.

The first DC power supply 221 functions as a direct current power supply by converting an alternating current voltage of the commercial power source into a direct current voltage to output a first voltage VA. The first voltage VA is mainly used as an operational voltage for the control system. In the example of FIG. 2, the first voltage VA is output to the first switch 211 and the control unit 240. The second DC power supply 222 functions as a direct current power supply by converting the alternating current voltage of the commercial power source into a direct current voltage to output a second voltage VB. The second voltage VB is mainly used as a driving voltage for the driving system. In the example of FIG. 2, the second voltage VB is output to the second switch 212 and the driving unit 225.

In general, a driving voltage used for a driving system is higher than an operational voltage for a control system. Accordingly, the second DC power supply 222 generates the second voltage VB that is higher than the first voltage VA. However, if the second DC power supply 222 generates the second voltage VB also during a period when the multifunction peripheral 1 does not operate, there would be wasteful power consumption. Hence, the relay 223 is provided at the power supply path from the power supply plug 220 to the second DC power supply 222. The relay 223 connects or disconnects the power supply path to the second DC power supply 222 in accordance with a relay control signal Sig_R input from the control unit 240.

The driving unit 225 generates a driving force for driving various members described in connection with FIG. 1. The driving unit 225 may include, for example, a motor that generates a rotational driving force, and a solenoid that displaces a member. A driving voltage based on the second voltage VB from the second DC power supply 222 is applied to the driving unit 225.

The control unit 240 is a control circuit that controls supplying of power to respective units of the multifunction peripheral 1. An operational voltage based on the first voltage VA from the first DC power supply 221 is applied to the control unit 240. The control unit 240 may be a part of the controller 80 illustrated in FIG. 1, for example. Typically, the control unit 240 includes a central processing unit (CPU), a read-only memory (ROM), a random access memory (RAM), a non-volatile memory, and input/output (I/O) ports. The ROM stores in advance one or more computer programs for power supply control. The RAM provides a temporary storage area for computation by the CPU. The CPU realizes the power supply control function of the control unit 240 by executing computer programs loaded in the RAM. The non-volatile memory stores data related to power supply control even in a period when the control unit 240 is not supplied with power. The I/O ports include an input port for receiving signals input to the control unit 240 and an output port for sending signals output from the control unit 240. For example, the control unit 240 can cause the printer unit 10 to form an image by operating the motor and solenoid constituting the driving system at appropriate timings based on sensor signals from sensors (not illustrated) that detect positions of a conveyed sheet.

<2-2. Switching of Power Supply Mode>

As described above, the resistor circuit section 200 is a heater for preventing dew condensation in the multifunction peripheral 1 or maintaining the temperature at or near a target temperature. Therefore, the resistor circuit section 200 needs to be constantly supplied with power irrespective of whether the driving system is operating or not. Meanwhile, if a configuration is employed where the resistor circuit section 200 is constantly supplied with power from the first DC power supply 221 that is not shut off for power saving purpose, there is a possibility that the output from the first DC power supply 221 becomes unstable when operating the driving system and it fails to supply sufficient power to the resistor circuit section 200.

Hence, in the present embodiment example, the control unit 240 switches a power supply for supplying the resistor circuit section 200 with power selectively between the first DC power supply 221 and the second DC power supply 222. In other words, the control unit 240 switches a voltage of the power supplied to the at least one heat generation resistor of the resistor circuit section 200 selectively between the first voltage VA from the first DC power supply 221 and the second voltage VB from the second DC power supply 222. That is, the first voltage VA and the second voltage VB are selectively applied to the connection terminals of the resistor circuit section 200. The control unit 240 may switch the power supply for supplying the resistor circuit section 200 with power depending on an operational state of the multifunction peripheral 1. For example, the control unit 240 causes power to be supplied from the first DC power supply 221 to the resistor circuit section 200 in a first power supply mode. The first power supply mode may be a mode for saving power consumed in the multifunction peripheral 1. Typically, the first power supply mode may be selected for saving consumed power in the driving unit 225 during a period when the driving system does not operate. In the following descriptions, the first power supply mode is referred to as a power-saving mode. In the power-saving mode, the control unit 240 controls the relay 223 to stop supplying power from the commercial power source to the second DC power supply 222.

The control unit 240 causes power to be supplied from the second DC power supply 222 to the resistor circuit section 200 in a second power supply mode. The second power supply mode is a mode for the multifunction peripheral 1 to perform image processing (for example, one or both of image formation and document reading). Typically, the second power supply mode may be selected for causing the driving unit 225 to operate. The operation of the driving unit 225 in the second power supply mode may include the above-described image-forming operation and reading operation as well as a preliminary operation for those operations. In the following descriptions, the second power supply mode during the preliminary operation is also referred to as a standby mode, and the second power supply mode during the actual image-forming operation and reading operation is also referred to as a driving mode. In the standby mode and the driving mode, the control unit 240 controls the relay 223 such that power is supplied from the commercial power source to the second DC power supply 222.

Thus, the second DC power supply 222 generates the second voltage VB based on the alternating current voltage of the commercial power source only in the standby mode and the driving mode in which power is supplied from the second DC power supply 222 to the resistor circuit section 200. On the other hand, the operational voltage based on the first voltage VA from the first DC power supply 221 is applied to the control unit 240 irrespective of the power supply mode, that is, irrespective of which one of the first DC power supply 221 and the second DC power supply 222 supplies the resistor circuit section 200 with power.

In general, an amount of heat generated by a heat generation resistor having a constant resistance value increases as the voltage applied to the heat generation resistor becomes higher. In the present embodiment example, in order to suppress an influence of the power supply mode to realize stable heating of heated members by the resistor circuit section 200, a circuit configuration is employed in which an effective resistance value of the resistor circuit section 200 is switchable between a first resistance value $R_A$ and a second resistance value $R_B$ that is higher than the first resistance value $R_A$. Then, in the power-saving mode, the control unit 240 causes power to be supplied from the first DC power supply 221 to the resistor circuit section 200 with the first voltage VA in addition to setting the effective resistance value of the resistor circuit section 200 to the first resistance value $R_A$. On the other hand, the control unit 240 causes power to be supplied from the second DC power supply 222 to the resistor circuit section 200 with the second voltage VB in addition to setting the effective resistance value of the resistor circuit section 200 to the second resistance value $R_B$.

Specifically, in the present embodiment example, the switching of the effective resistance value of the resistor circuit section 200 is performed by switching the connection for the first resistor 201 and the second resistor 202 between parallel connection and serial connection.

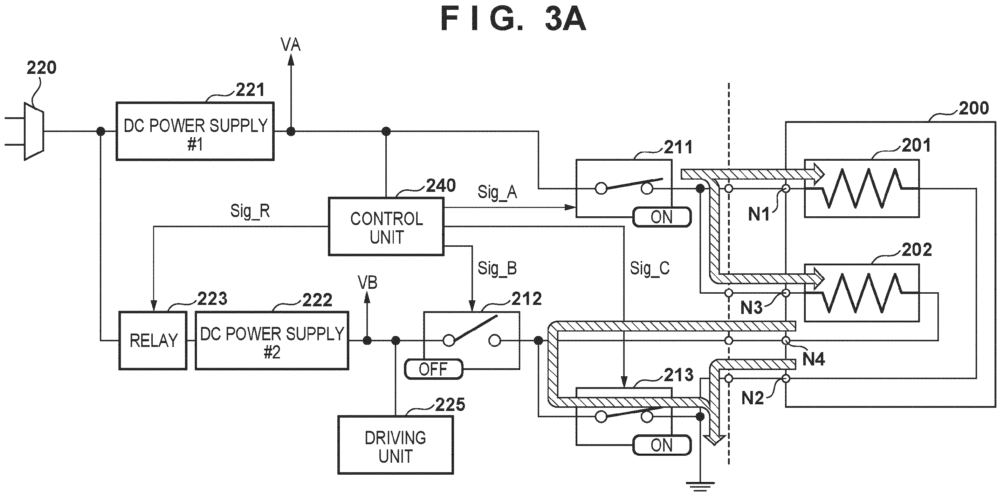

FIG. 3A illustrates how the first resistor 201 and the second resistor 202 are connected in parallel in the first power supply mode (power-saving mode). In the first power supply mode, the control unit 240 switches on the first switch 211 and the third switch 213, and switches off the second switch 212. This results in that the first resistor 201 and the second resistor 202 of the resistor circuit section 200 are connected in parallel to the first DC power supply 221. In FIG. 3A, the parallel power supply paths are indicated by diagonal shading. The current from the first DC power supply 221 passes through the first switch 211 and branches toward the nodes N1 and N3. The current that has passed through the node N1 causes the first resistor 201 to generate heat, and flows to the ground via the node N2. Meanwhile, the current having passed through the node N3 causes the second resistor 202 to generate heat, and flows to the ground via the node N4 and the third switch 213. When the resistance value of the first resistor 201 is denoted by $R_1$ and the resistance value of the second resistor 202 is denoted by $R_2$, the effective resistance value $R_A$ of the resistor circuit section 200 with such parallel connection can be expressed as the following equation:

[Math 1]

$$R_A = \frac{R_1 \cdot R_2}{R_1 + R_2} \qquad\qquad (1)$$

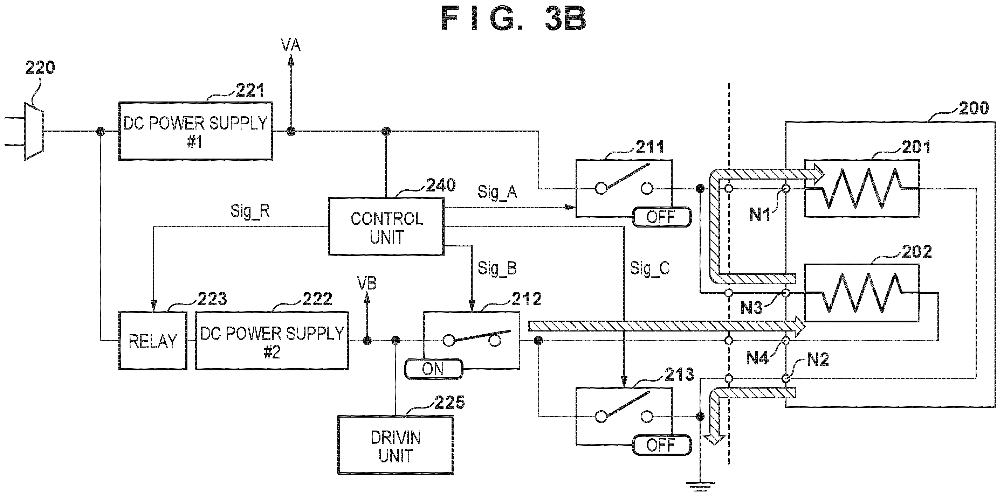

FIG. 3B illustrates how the first resistor 201 and the second resistor 202 are connected in series in the second power supply mode (standby mode and driving mode). In the second power supply mode, the control unit 240 switches off the first switch 211 and the third switch 213, and switches on the second switch 212. This results in that the first resistor 201 and the second resistor 202 of the resistor circuit section 200 are connected in series to the second DC power supply 222. In FIG. 3B, the serial power supply path is indicated by diagonal shading. The current from the second DC power supply 222 passes through the second switch 212 and flows to the node N4. The current that has passed through the node N4 goes sequentially through the second resistor 202, the node N3, the node N1, and the first resistor 201 while causing the two resistors to generate heat, and flows to the ground via the node N2. The effective resistance value $R_B$ of the resistor circuit section 200 with such serial connection can be expressed as the following equation:

[Math 2]

$$R_B = R_1 + R_2 \qquad\qquad (2)$$

The resistance value $R_1$ of the first resistor 201 and the resistance value $R_2$ of the second resistor are selected taking the first voltage VA and the second voltage VB into consideration. For example, the resistance values $R_1$ and $R_2$ may be selected to satisfy the following equation:
[Math 3]

$$\frac{VA^2}{R_A} = \frac{VB^2}{R_B} \qquad (3)$$

The left side of Equation (3) represents power consumption in the resistor circuit section 200 in the first power supply mode, and the right side of Equation (3) represents power consumption in the resistor circuit section 200 in the second power supply mode. Equation (3) can be converted using the resistance values $R_1$ and $R_2$ as follows:
[Math 4]

$$\frac{(R_1+R_2)^2}{R_1 \cdot R_2} := \left(\frac{VB}{VA}\right)^2 \qquad (4)$$

It is possible to heat a member to be heated equally in both power supply modes with a consistent control logic by selecting the resistance values $R_1$ and $R_2$ such that Equation (4) is satisfied. That is, the control unit 240 does not need to switch the control logic for temperature control depending on the selected power supply mode.

As an example, assume that the first voltage VA is equal to 12 volts (V) and the second voltage is equal to 24 V. In this case, the resistance values $R_1$ may be equal to the resistance value $R_2$. When $R_2 = R_1$ is substituted in the left side of Equation (4) and VB = 2*VA in the right side, the left side will be $(R_1 + R_1)^2 / R_1^2 = 4$, and the right side will be $(2*VA/VA)^2 = 4$, which means that Equation (4) holds true.

The following Table 1 summarizes the sources of power supply to heaters, effective resistance values and mode descriptions for the above-described three types of modes. Power consumptions of the entire apparatus in the power-saving mode, the standby mode and the driving mode, respectively denoted by $W_1$, $W_2$ and $W_3$, satisfy $W_1 < W_2 < W_3$.

[Table 1]

| Name | Source of Power Supply/ Voltage | Effective Resistance Value | Description |
|---|---|---|---|
| Power-Saving Mode | 1st DC Power Supply/ 1st Voltage VA | $R_A$ | Shut Off Supplying Power to 2nd DC Power Supply for Driving System |
| Standby Mode | 2nd DC Power Supply/ 2nd Voltage VB (VB > VA) | $R_B$ ($R_B > R_A$) | Preliminary Operation is Done in Driving System |
| Driving Mode | 2nd DC Power Supply/ 2nd Voltage VB | $R_B$ | Reading Operation and/or Image-Forming Operation is(are) Done in Driving System |

Table 1. Source of Supplying Power to Heater per Operation Mode of Multifunction Peripheral

<2-3. Process Flow>

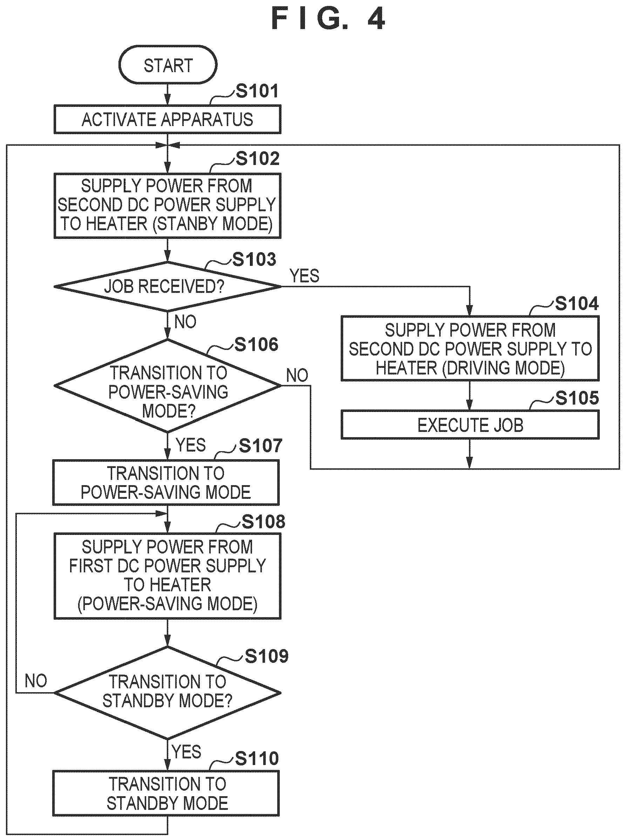

Fig. 4 is a flowchart illustrating an example of a flow of mode switching processing that may be executed by the control unit 240. In the following descriptions, a processing step will be abbreviated as S (Step).

First, at S101, when the multifunction peripheral 1 is powered on, the control unit 240 executes a start-up sequence to activate the first DC power supply 221 and the second DC power supply 222, and also energizes respective units of the multifunction peripheral 1 to check their statuses. In response to the execution of the start-up sequence, the multifunction peripheral 1 transitions to the standby mode.

In the standby mode, at S102, the control unit 240 set the effective resistance value of the resistor circuit section 200 to the second resistance value $R_B$, and also causes power to be supplied from the second DC power supply 222 to the resistor circuit section 200 with the second voltage VB. The resistor circuit section 200 generates heat with the power supplied from the second DC power supply 222 and heats the member to be heated. Herein, the consumed power at the resistor circuit section 200 will be $(VB)^2/R_B$.

During the standby mode period, at S103, the control unit 240 waits for a job (for example, a print job, a copy job or a scan job),
In response to receiving a job, the processing proceeds to S104 where the multifunction peripheral 1 transitions to the driving mode.

In the driving mode, at S104, the control unit 240 keeps the effective resistance value of the resistor circuit section 200 set to the second resistance value $R_B$, and still causes power to be supplied from the second DC power supply 222 to the resistor circuit section 200 with the second voltage VB. The resistor circuit section 200 generates heat with the power supplied from the second DC power supply 222 and heats the member to be heated. Herein, the consumed power at the resistor circuit section 200 will be $(VB)^2/R_B$. In addition, at S105, the control unit 240 executes the received job by controlling one or both of the printer unit 10 and the scanner unit 50. Then, the processing goes back to S102, and the multifunction peripheral 1 returns to the standby mode.

During the standby mode period, at S106, the control unit 240 periodically determines whether to transition to the power-saving mode. For example, the control unit 240 may determine to transition to the power-saving mode when no job has been received for a predefined length of time or when a transition to the power-saving mode has been instructed via the operation unit 70. In a case where it is determined to stay in the standby mode, the processing goes back to S102.

In a case where it is determined to transition to the power-saving mode at S106, the control unit 240 executes a sequence for mode-transitioning to the power-saving mode at S107. For example, the control unit 240 switches on the first switch 211 and the third switch 213 and switches off the second switch whereby the first resistor 201 and the second resistor 202 of the resistor circuit section 200 are connected in parallel to the first DC power supply 221. This results in that the effective resistance value of the resistor circuit section 200 is set to the first resistance value $R_A$. The control unit 240 also stops operations of the driving system, and controls the relay 223 to shut off the power supply path from the commercial power source to the second DC power supply 222.

In the power-saving mode, at S108, the control unit 240 causes power to be supplied from the first DC power supply 221 to the resistor circuit section 200 with the first voltage VA. The resistor circuit section 200 generates heat with the power supplied from the first DC power supply 221 and heats the member to be heated. Herein, the consumed power at the resistor circuit section 200 will be $(VA)^2/R_A$. If the resistance value $R_1$ and the resistance value $R_2$ have been appropriately selected taking the first voltage VA and the second voltage VB into consideration, $(VA)^2/R_A = (VB)^2/R_B$ holds true, and the power consumption at the resistor circuit section 200 is kept constant independently of the modes.

During the power-saving mode period, at S109, the control unit 240 periodically determines whether to transition to the standby mode. For example, the control unit 240 may determine to transition to the standby mode when a user operation has been detected in the operation unit 70. In a case where it is determined to stay in the power-saving mode, the processing goes back to S108.

In a case where it is determined to transition to the standby mode at S109, the control unit 240 executes a sequence for mode-transitioning to the standby mode at S110. For example, the control unit 240 switches off the first switch 211 and the third switch 213 and switches on the second switch whereby the first resistor 201 and the second resistor 202 of the resistor circuit section 200 are connected in series to the second DC power supply 222. This results in that the effective resistance value of the resistor circuit section 200 is set to the second resistance value $R_B$. The control unit 240 also controls the relay 223 to resume supplying of power from the commercial power source to the second DC power supply 222. Then, the processing goes back to S102.

In the present embodiment example, a configuration has been described in which the connection state of two heat generation resistors to a selected power supply source is switched between parallel connection and serial connection depending on which of two DC power supplies outputting different voltages is selected as the power supply source. By switching the connection state as described above, the effective (combined) resistance value of the heat generation resistors changes, so that the power consumed for heating the heated member is kept constant. This makes it possible to avoid the control logic for temperature control becoming complicated, and ensures stability of heating by the heater.

<3. Second Embodiment Example>

<3-1. Circuit Configuration Related to Power Supply Control>

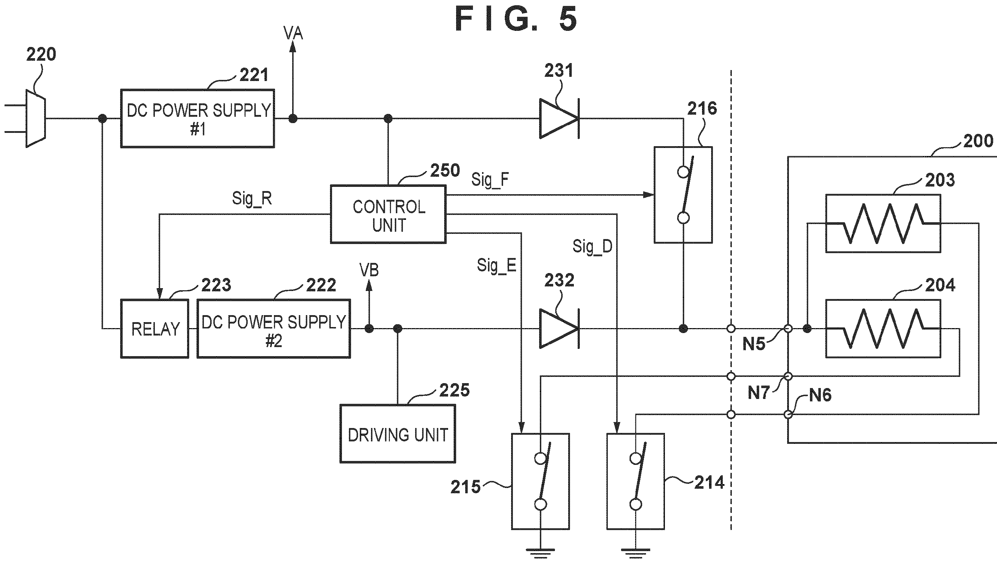

FIG. 5 is a circuit diagram illustrating a second embodiment example of a configuration of a circuit related to power supply control. In the second embodiment example, the multifunction peripheral 1 includes the resistor circuit section 200, a fourth switch 214, a fifth switch 215, a sixth switch 216, the power supply plug 220, the first DC power supply 221, the second DC power supply 222, the relay 223, the driving unit 225, a first diode 231, a second diode 232, and a control unit 250.

The resistor circuit section 200 is a heat generation resistor circuit arranged in the multifunction peripheral 1. Also in the present embodiment example, the resistor circuit section 200 corresponds to at least one of the heaters 200a, 200b and 200c described using FIG. 1. The resistor circuit section 200 includes at least one heat generation resistor for heating inside of the printer unit 10 or the scanner unit 50, and two or more connection terminals. FIG. 5 illustrates an example where the resistor circuit section 200 includes a third resistor 203 and a fourth resistor 204 as well as three nodes N5 to N7. The nodes N5 to N7 receive power to be supplied to the third resistor 203 and the fourth resistor 204. One end of the third resistor 203 is connected to the node N5, and the other end to the node N6. One end of the fourth resistor 204 is connected to the node N5, and the other end to the node N7. The resistance value of the third resistor 203 is equal to the first resistance value $R_A$ described in connection with the first embodiment example. The resistance value of the fourth resistor 204 is equal to the second resistance value $R_B$ described in connection with the first embodiment example.

The fourth switch 214, the fifth switch 215 and the sixth switch 216 are switching circuits for switching a connection state of a power supply path among 'Connected (ON)' and 'Disconnected (OFF)'. For example, each switching circuit may be a mechanical relay or an electrical switching element.

The fourth switch 214 opens and closes the power supply path that passes through the third resistor 203. One end of the fourth switch 214 is connected to the node N6, and the other end to the ground. The control unit 250 can switch the state of the fourth switch 214 by outputting a switching signal Sig_D to the fourth switch 214.

The fifth switch 215 opens and closes the power supply path that passes through the fourth resistor 204. One end of the fifth switch 215 is connected to the node N7, and the other end to the ground. The control unit 250 can switch the state of the fifth switch 215 by outputting a switching signal Sig_E to the fifth switch 215.

The sixth switch 216 opens and closes the power supply path from the first DC power supply 221. One end of the sixth switch 216 is connected to the node N5, and the other end to the first diode 231. The control unit 250 can switch the state of the sixth switch 216 by outputting a switching signal Sig_F to the sixth switch 216.

Also in the present embodiment example, the first voltage VA of the direct current output from the first DC power supply 221 is mainly used as an operational voltage for the control system. In the example of FIG. 5, the first voltage VA is output to the first diode 231 and the control unit 250. The second voltage VB of the direct current output from the second DC power supply 222 is mainly used as a driving voltage for the driving system. In the example of FIG. 5, the second voltage VB is output to the second diode 232 and the driving unit 225. The relay 223 connects or disconnects the power supply path from the commercial power source to the second DC power supply 222 in accordance with a relay control signal Sig_R input from the control unit 250.

The first diode 231 prevents a reverse current flow in the power supply path from the first DC power supply 221. The input of the first diode 231 is connected to the first DC power supply 221. The output of the first diode 231 is connected to the other end mentioned above of the sixth switch 216. The second diode 232 prevents a reverse current flow in the power supply path from the second DC power supply 222. The input of the second diode 232 is connected to the second DC power supply 222. The output of the second diode 232 is connected to the one end of the sixth switch 216 and the node N5.

The control unit 250 is a control circuit that controls supplying of power to respective units of the multifunction peripheral 1. An operational voltage based on the first voltage VA from the first DC power supply 221 is applied to the control unit 250. The control unit 250 includes a CPU, a ROM, a RAM, a non-volatile memory, and I/O ports similarly to the control unit 240 according to the first embodiment example. For example, the control unit 250 can cause the printer unit 10 to form an image by operating the motor and solenoid constituting the driving system at appropriate timings based on sensor signals from sensors (not illustrated) that detect positions of a conveyed sheet.

<3-2. Switching of Power Supply Mode>

Also in the present embodiment example, the control unit 250 switches a power supply for supplying the resistor circuit section 200 with power selectively between the first DC power supply 221 and the second DC power supply 222. For example, the control unit 250 causes power to be supplied from the first DC power supply 221 to the resistor circuit section 200 in the first power supply mode (power-saving mode). In the power-saving mode, the control unit 250 controls the relay 223 to stop supplying power from the commercial power source to the second DC power supply 222.

The control unit 250 causes power to be supplied from the second DC power supply 222 to the resistor circuit section 200 in the second power supply mode (standby mode and driving mode). In the standby mode and the driving mode, the control unit 250 controls the relay 223 such that power is supplied from the commercial power source to the second DC power supply 222.

Moreover, in the power-saving mode, the control unit 250 causes power to be supplied from the first DC power supply 221 to the resistor circuit section 200 with the first voltage VA in addition to setting the effective resistance value of the resistor circuit section 200 to the first resistance value $R_A$. On the other hand, in the standby mode and the driving mode, the control unit 250 causes power to be supplied from the second DC power supply 222 to the resistor circuit section 200 with the second voltage VB in addition to setting the effective resistance value of the resistor circuit section 200 to the second resistance value $R_B$.

Specifically, in the present embodiment example, the switching of the effective resistance value of the resistor circuit section 200 is performed by opening one of the power supply path passing through the third resistor 203 and the power supply path passing through the fourth resistor 204 and closing the other.

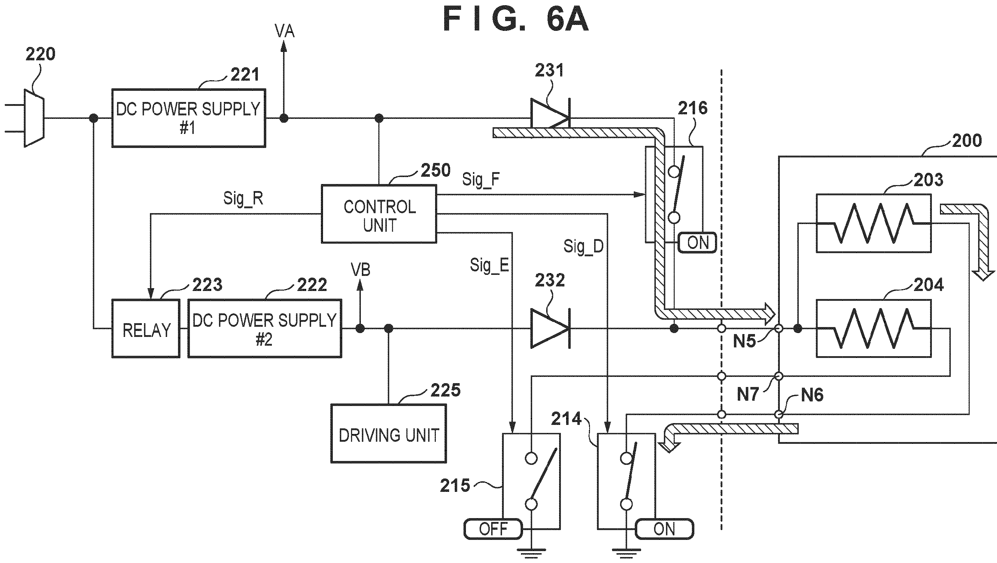

FIG. 6A illustrates how the third resistor 203 and the fourth resistor 204 are connected in the first power supply mode (power-saving mode). In the first power supply mode, the control unit 250 switches on the fourth switch 214 and the sixth switch 216, and switches off the fifth switch 215. This results in that the power supply path passing through the third resistor 203 is closed between the first DC power supply 221 and the ground. In other words, a current passes from the first DC power supply 221 to the ground via the third resistor 203. On the other hand, the power supply path passing through the fourth resistor 204 is opened. In other words, a current passing through the fourth resistor 204 is shut off. In FIG. 6A, the power supply path passing through the third resistor 203 is indicated by diagonal shading. The current from the first DC power supply 221 passes through the first diode 231, the sixth switch 216, the node N5, the third resistor 203, the node N6, and the fourth switch 214, and flows to the ground. The effective resistance value of the resistor circuit section 200 in this case is equal to the resistance value $R_A$ of the third resistor 203.

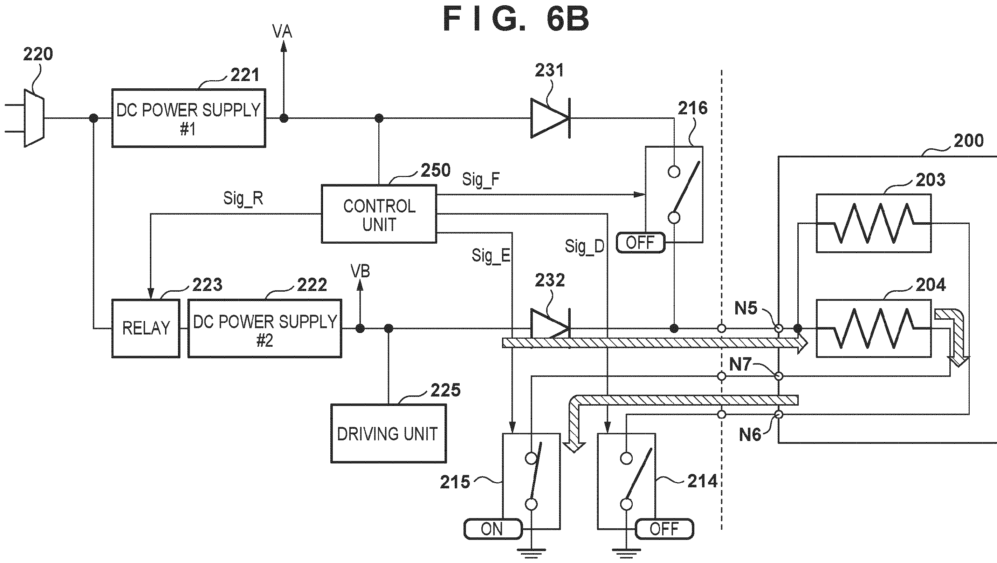

FIG. 6B illustrates how the third resistor 203 and the fourth resistor 204 are connected in the second power supply mode (standby mode and driving mode). In the second power supply mode, the control unit 250 switches off the fourth switch 214 and the sixth switch 216, and switches on the fifth switch 215. This results in that the power supply path passing through the third resistor 203 is opened whereas the power supply path passing through the fourth resistor 204 is closed between the second DC power supply 222 and the ground. In FIG. 6B, the power supply path passing through the fourth resistor 204 is indicated by diagonal shading. The current from the second DC power supply 222 passes through the second diode 232, the node N5, the fourth resistor 204, the node N7, and the fifth switch 215, and flows to the ground. The effective resistance value of the resistor circuit section 200 in this case is equal to the resistance value $R_B$ of the fourth resistor 204.

The resistance value $R_A$ of the third resistor 203 and the resistance value $R_B$ of the fourth resistor may be selected taking the first voltage VA and the second voltage VB into consideration such that the above-described Equation (3) is satisfied. In this manner, it is possible to heat a member to be heated equally in both power supply modes with a consistent control logic. That is, it does not require the control unit 250 to switch the control logic for temperature control depending on the selected power supply mode.

As an example, assume that the first voltage VA is equal to 12 V and the second voltage is equal to 24 V. In this case, the resistance values $R_B$ may be four times the resistance value $R_A$. When $R_B = 4*R_A$ and VB = 2*VA are substituted in the right side of Equation (3), the right side will be $(2*VA)^2 / 4*R_A = VA^2 / R_A$, which equals the left side, meaning that Equation (3) holds true.

<3-3. Process Flow>

The flow of mode switching processing that may be executed by the control unit 250 in the present embodiment example may be similar to the flow of mode switching processing in the first embodiment example described using FIG. 4. However, according to the present embodiment example, when transitioning to the power-saving mode at S107, the control unit 250 sets the effective resistance value of the resistor circuit section 200 to the first resistance value $R_A$ by closing the power supply path from the first DC power supply 221 passing through the third resistor 203. The operations of the driving system are stopped, and the power supply path from the commercial power source to the second DC power supply 222 is shut off. In addition, when transitioning to the standby mode at S110, the control unit 240 sets the effective resistance value of the resistor circuit section 200 to the second resistance value $R_B$ by closing the power supply path from the second DC power supply 222 passing through the fourth resistor 204. The operations of the driving system are enabled, and power is supplied from the commercial power source to the second DC power supply 222.

In the present embodiment example, a configuration has been described in which a heat generation resistor that is connected to a selected power supply source is switched between two heat generation resistors depending on which of two DC power supplies outputting different voltages is selected as the power supply source. By switching the connection state as described above as well, the power consumed for heating the heated member is kept constant. This makes it possible to avoid the control logic for temperature control becoming complicated, and ensures stability of heating by the heater.

<4. Modification Examples>

Various modification examples can be contemplated for the above-described embodiment examples.

For example, the first and second embodiment examples have been described with an example where the power supply mode of the resistor circuit section 200 is switched in conjunction with an operation mode of the multifunction peripheral 1. However, the trigger for switching the power supply mode is not limited to such an example. In a first modification example, the switching of the power supply mode may be triggered based on comparison between an amount of consumed current detected for the selected power supply source and a predefined threshold, instead of being triggered in conjunction with an operation mode of the multifunction peripheral 1. In this modification example, in a state in which power is supplied from the first DC power supply 221 to the resistor circuit section 200, the power supply source is switched from the first DC power supply 221 to the second DC power supply 222 when the amount of current consumed in the first DC power supply 221 exceeds a first threshold. In addition, in a state in which power is supplied from the second DC power supply 222 to the resistor circuit section 200, the power supply source is switched from the second DC power supply 222 to the first DC power supply 221 when the amount of current consumed in the second DC power supply 222 falls below a second threshold. Also in this modification example, the effective resistance value of the resistor circuit section 200 may be set to one of two different values (by switching between parallel connection and serial connection or by exclusive connection of either one of two heat generation resistors) depending on the selected power supply source.

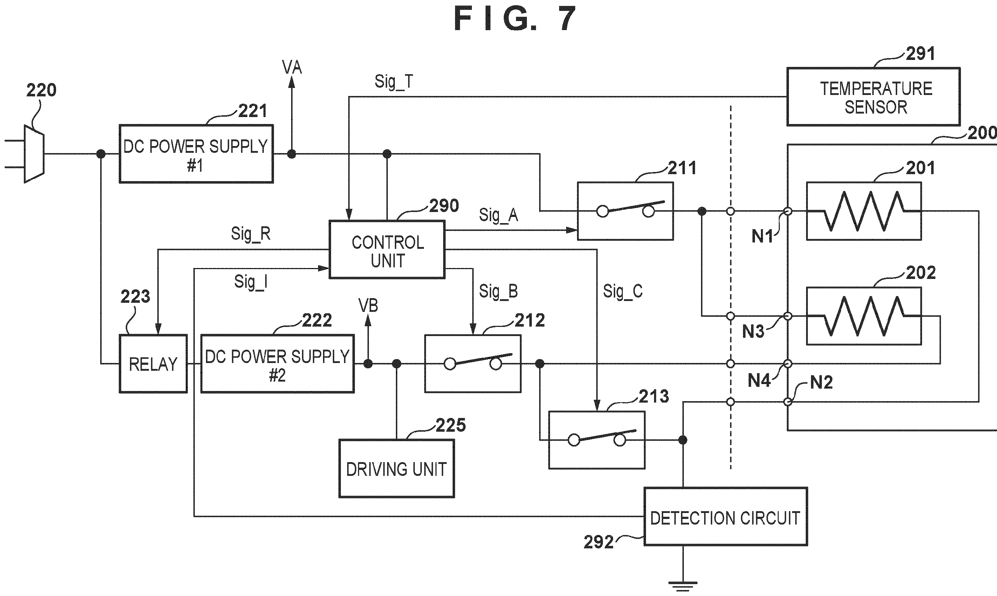

In a second modification example, the multifunction peripheral 1 may further include a temperature control function for enabling finer temperature control and an abnormality detection function for detecting an abnormality of a power supply path. FIG. 7 illustrates an example of a configuration of a circuit according to the second modification example. In the example of FIG. 7, the multifunction peripheral 1 includes a temperature sensor 291 and a detection circuit 292 in addition to the constituent elements according to the first embodiment example illustrated in FIG. 2. Moreover, the multifunction peripheral 1 includes a control unit 290 instead of the control unit 240.

The temperature sensor 291 is a measuring unit configured to measure a temperature of a heated member. In a case where the resistor circuit section 200 corresponds to the heater 200a, the heated member may be the paper feeding cassette 15 (or a sheet bundle therein). In a case where the resistor circuit section 200 corresponds to the heater 200b, the heated member may be the image-forming unit 20. In a case where the resistor circuit section 200 corresponds to the heater 200c, the heated member may be the optical unit 153. The temperature sensor 291 outputs a sensor signal Sig_T indicative of the temperature of the heated member to the control unit 290.

The detection circuit 292 is a detection unit configured to detect a magnitude of a current that flows in the resistor circuit section 200. One end of the detection circuit 292 is connected to the node N2 and the third switch 213, and the other end of the detection circuit 292 is connected to the ground. In the first power supply mode, the detection circuit 292 detects a magnitude of a current that has been outputted from the first DC power supply 221 and has passed through the first resistor 201 and the second resistor 202 in parallel. In the second power supply mode, the detection circuit 292 detects a magnitude of a current that has been outputted from the second DC power supply 222 and has passed sequentially through the first resistor 201 and the second resistor 202. The detection circuit 292 outputs to the control unit 290 a detection signal Sig_I indicative of the magnitude of the detected current.

The control unit 290 controls, based on the measured temperature of the heated member indicated by the sensor signal Sig_T from the temperature sensor 291, supplying of power to the resistor circuit section 200 such that the temperature of the heated member is maintained at a target temperature. For example, the control unit 290 may maintain the temperature of the heated member at or near the target temperature by opening and closing a switching element on the power supply path with a duty ratio determined through publicly-known feedback control. In this manner, the temperature control in the multifunction peripheral 1 can be refined and defects due to a drop in temperature can be more effectively prevented.

Furthermore, the control unit 290 detects an abnormality of a power supply path in the multifunction peripheral 1 based on the selected power supply mode and the magnitude of current (detected current value) indicated by the detection signal Sig_I from the detection circuit 292. The selected power supply mode may indicate which of the first DC power supply 221 and the second DC power supply 222 is being caused to supply the resistor circuit section 200 with power at that point in time. The following Table 2 indicates some examples of abnormality detection conditions based on the power supply mode and a detected current value.

[Table 2]

| Power Supply Mode /Power Supply Source | Detected Current Value | Estimated Cause of Abnormality |
|---|---|---|
| 1st Power Supply Mode /1st DC Power Supply | Larger than Upper Limit Value | Deterioration of Heat Generation Resistor |
| 1st Power Supply Mode /1st DC Power Supply | Smaller than Lower Limit Value | Disconnection |
| 2nd Power Supply Mode /2nd DC Power Supply | Larger than Upper Limit Value | Switch Failure |
| 2nd Power Supply Mode /2nd DC Power Supply | Smaller than Lower Limit Value | Disconnection |

Table 2. Examples of Abnormality Detection Conditions Based on Power Supply Mode and Detected Current Value

According to the first entry of Table 2, when the current value detected in the first power supply mode is larger than a predetermined upper limit value, the control unit 290 may detect an abnormality caused by deterioration of the heat generation resistor of the resistor circuit section 200. According to the second entry, when the current value detected in the first power supply mode is smaller than a predetermined lower limit value, the control unit 290 may detect an abnormality caused by disconnection of the power supply path. According to the third entry, when the current value detected in the second power supply mode is larger than a predetermined upper limit value, the control unit 290 may detect an abnormality caused by failure of either switch. The abnormality detection condition of the fourth entry is similar to that of the second entry and, when the current value detected in the second power supply mode is smaller than a predetermined lower limit value, the control unit 290 may detect an abnormality caused by disconnection of the power supply path. However, the lower limit values to be compared with a current value may be different between the first power supply mode and the second power supply mode.

When the control unit 290 has detected an abnormality in accordance with the abnormality detection conditions exemplified above, it can notify the user of the occurrence of the abnormality and the estimated cause of the abnormality via the operation unit 70 so as to prompt the user to inspect the cause and take appropriate measures for recovery in a timely manner.

In a further modification example, the multifunction peripheral 1 may include a constant current circuit in one or both of the power supply path from the first DC power supply 221 and the power supply path from the second DC power supply 222, which regulates the amount of current so that it does not exceed a rated current. This allows for further optimization of the power consumed for heating the heated member.

Although the first embodiment example and the second embodiment example have been described with an example where the multifunction peripheral 1 includes two DC power supplies, the technology according to the present disclosure is not limited to this example. In a modification example, the technology according to the present disclosure may be applied to an image processing apparatus that includes a single power supply circuit that is capable of outputting a variable voltage (variable-output power supply). In this modification example, the power supply circuit is configured to supply loads of the control system (for example, a processor) and loads of the driving system (for example, a motor) of the image processing apparatus with power. For example, the power supply circuit supplies the control system and a heater with power at a first voltage in the power-saving mode (first power supply mode). At this time, supplying of power to the driving system is shut off. On the other hand, the power supply circuit supplies the control system, the heater and the driving system with power at a second voltage higher than the first voltage in the standby mode and the driving mode (second power supply mode). In this manner, even in a case where the image processing apparatus only includes a single power supply circuit, it is possible to supply sufficient power to the heater while fulfilling the demand of power saving by selectively applying different voltages to the heater.

<5. Conclusion>

Thus far, embodiments of the technology according to the present disclosure and a variety of related embodiment examples and modification examples have been described with reference to FIGS. 1 to 7. In the above-described embodiments, an image processing apparatus includes a first direct current power supply configured to output a first voltage, a second direct current power supply configured to output a second voltage that is higher than the first voltage, and a resistor circuit section including at least one heat generation resistor for heating inside of the image processing apparatus. A control unit of the image processing apparatus is configured to switch a power supply for supplying the resistor circuit section with power selectively between the first direct current power supply and the second direct current power supply. According to this configuration, it is possible to activate the second direct current power supply to supply power from the second direct current power supply to the heat generation resistor in a situation in which sufficient power capacity may be needed. Furthermore, it is possible to heat a member to be heated by supplying power from the first direct current power supply to the heat generation resistor while shutting off supplying of power from the second direct current power supply to reduce power consumption in a situation in which saving power may be needed. Accordingly, it is possible to prevent defects due to a drop in temperature while fulfilling the demand of power saving.

The embodiment examples and modification examples described above may be combined with each other in any way. For example, one or more of the temperature control function, the abnormality detection function and the constant current circuit described using FIG. 7 may be combined with any of the first embodiment example and the second embodiment example. Supplying some of the plurality of heaters described using FIG. 1 with power as in the first embodiment example while supplying the other heaters with power as in the second embodiment example may also be considered.

<6. Other Embodiments>

Embodiment(s) of the present invention can also be realized by a computer of a system or apparatus that reads out and executes computer executable instructions (e.g., one or more programs) recorded on a storage medium (which may also be referred to more fully as a 'non-transitory computerreadable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)$^{TM}$), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus (1, 10, 50) comprising:

   a first direct current power supply (221) configured to output a first voltage;
   a second direct current power supply (222) configured to output a second voltage that is higher than the first voltage;
   a resistor circuit section (200) including at least one heat generation resistor (201, 202, 203, 204) configured to heat inside of the image processing apparatus; and
   a control means (240, 250, 290) configured to switch a power supply to supply the resistor circuit section with power between the first direct current power supply and the second direct current power supply.

2. The image processing apparatus according to claim 1, wherein

   the resistor circuit section is configured to change an effective resistance value of the resistor circuit section to and from a first resistance value and a second resistance value that is higher than the first resistance value, and
   the control means is configured to:

      set the effective resistance value of the resistor circuit section to the first resistance value when the first direct current power supply supplies the resistor circuit section with power, and
      set the effective resistance value of the resistor circuit section to the second resistance value when the second direct current power supply supplies the resistor circuit section with power.

3. The image processing apparatus according to claim 2, wherein

   the at least one heat generation resistor of the resistor circuit section includes a first resistor (201) and a second resistor (202), and
   the control means is configured to:

      set the effective resistance value of the resistor circuit section to the first resistance value by connecting the first resistor and the second resistor in parallel to the first direct current power supply when the first direct current power supply supplies the resistor circuit section with power, and
      set the effective resistance value of the resistor circuit section to the second resistance value by connecting the first resistor and the second resistor in series to the second direct current power supply when the second direct current power supply supplies the resistor circuit section with power.

4. The image processing apparatus according to claim 3, further comprising:

   a first switch (211), a second switch (212) and a third switch (213) each having a first end and a second end,
   wherein each of the first resistor and a second resistor has a first end and a second end,
   the first end of the first resistor and the first end of the second resistor are connected to the first end of the first switch,
   the second end of the first switch is connected to the first direct current power supply,

the second end of the second resistor is connected to the first end of the second switch,
the second end of the second switch is connected to the second direct current power supply,
the second end of the first resistor is connected to the first end of the third switch and ground,
the second end of the third switch is connected to the first end of the second switch, and
the control means is configured to:

connect the first resistor and the second resistor of the resistor circuit section in parallel to the first direct current power supply by switching on the first switch and the third switch and switching off the second switch, and
connect the first resistor and the second resistor of the resistor circuit section in series to the second direct current power supply by switching off the first switch and the third switch and switching on the second switch.

5. The image processing apparatus according to claim 2, wherein the at least one heat generation resistor includes a third resistor (203) having the first resistance value and a fourth resistor (204) having the second resistance value, and the control means is configured to:

set the effective resistance value of the resistor circuit section to the first resistance value by closing a power supply path from the first direct current power supply going through the third resistor when the first direct current power supply supplies the resistor circuit section with power, and
set the effective resistance value of the resistor circuit section to the second resistance value by closing a power supply path from the second direct current power supply going through the fourth resistor when the second direct current power supply supplies the resistor circuit section with power.

6. The image processing apparatus according to claim 1, wherein

the at least one heat generation resistor of the resistor circuit section includes a first resistor (201) and a second resistor (202), and
the control means is configured to:

connect the first resistor and the second resistor in parallel to the first direct current power supply when the first direct current power supply supplies the resistor circuit section with power, and
connect the first resistor and the second resistor in series to the second direct current power supply when the second direct current power supply supplies the resistor circuit section with power.

7. The image processing apparatus according to claim 1, wherein

the at least one heat generation resistor includes a third resistor (203) having a first resistance value and a fourth resistor (204) having a second resistance value that is higher than the first resistance value, and
the control means is configured to:

close a power supply path from the first direct current power supply going through the third resistor when the first direct current power supply supplies the resistor circuit section with power, and
close a power supply path from the second direct current power supply going through the fourth resistor when the second direct current power supply supplies the resistor circuit section with power.

8. The image processing apparatus according to any one of claims 1 to 7, wherein

the first direct current power supply is configured to convert an alternating current voltage of a commercial power source into the first voltage of direct current to output the first voltage, and
the second direct current power supply is configured to convert the alternating current voltage of the commercial power source into the second voltage of direct current to output the second voltage.

9. The image processing apparatus according to any one of claims 1 to 8, further comprising:

a driving means (225),
wherein an operational voltage based on the first voltage output from the first direct current power supply is applied to the control means, and
a driving voltage based on the second voltage output from the second direct current power supply is applied to the driving means.

10. The image processing apparatus according to claim 9, wherein the operational voltage is applied to the control means irrespective of which one of the first direct current power supply and the second direct current power supply supplies the resistor circuit section with power.

11. The image processing apparatus according to claim 10, wherein the second direct current power supply is configured to generate the second voltage only in a case where power is supplied from the second direct current power supply to the resistor circuit section.

12. The image processing apparatus according to any one of claims 9 to 11, wherein
the control means is configured to switch between the first direct current power supply and the second direct current power supply so that:

the first direct current power supply supplies the resistor circuit section with power in a first power supply mode for saving power consumed in the driving means, and
the second direct current power supply supplies the resistor circuit section with power in a second power supply mode for operating the driving means.

13. The image processing apparatus according to any one of claims 1 to 12, wherein the control means is configured to switch a power supply to supply the resistor circuit section with power between the first direct current power supply and the second direct current power supply depending on an operational state of the image processing apparatus.

14. The image processing apparatus according to any one of claims 1 to 13, wherein
the control means is configured to switch between the first direct current power supply and the second direct current power supply so that:

the first direct current power supply supplies the resistor circuit section with power in a first power supply mode for saving consumed power, and
the second direct current power supply supplies the resistor circuit section with power in a second power supply mode in which the image processing apparatus performs image processing.

15. The image processing apparatus according to any one of claims 1 to 14, wherein the image processing apparatus includes an image-forming apparatus configured to form an image on a sheet, and
the resistor circuit section includes at least one of: a first resistor circuit section (200a) for heating a container (15) configured to contain a bundle of sheets; and a second resistor circuit section (200b) for heating an image-forming means (20).

16. The image processing apparatus according to any one of claims 1 to 15, wherein the image processing apparatus includes a reading apparatus (50) configured to optically read a document, and
the resistor circuit section includes a third resistor circuit section (200c) for heating an optical system (153) of the reading apparatus.

17. The image processing apparatus according to any one of claims 1 to 16, further comprising a measuring means (291) configured to measure a temperature of a heated member configured to be heated by the at least one heat generation resistor, and
the control means is configured to control, based on the temperature measured by the measuring means, power supplied to the resistor circuit section.

18. The image processing apparatus according to any one of claims 1 to 17, further comprising a detection means (292) configured to detect a magnitude of a current that flows in the resistor circuit section, and
the control means is configured to detect an abnormality of a power supply path in the image processing apparatus based on which one of the first direct current power supply and the second direct current power supply is caused to supply the resistor circuit section with power and the magnitude of the current detected by the detection means.

19. A heat generation resistor circuit (200) for use in an image processing apparatus (1, 10, 50) comprising:

at least one heat generation resistor (201, 202, 203, 204); and

two or more connection terminals (N1, N2, N3, N4, N5, N6, N7) configured to receive power supplied to the at least one heat generation resistor,
wherein a first voltage and a second voltage that is higher than the first voltage are selectively applied to the two or more connection terminals.

20. An image processing apparatus (1, 10, 50) comprising:

the heat generation resistor circuit according to claim 19; and
a control means (240, 250, 290) configured to switch a voltage of the power supplied to the at least one heat generation resistor of the heat generation resistor circuit selectively between the first voltage and the second voltage.

F I G. 1

EP 4 607 284 A1

# F I G. 2

# F I G. 3A

EP 4 607 284 A1

F I G. 3B

# FIG. 4

```
            ( START )
                │
                ▼           ⟋S101
    ┌────────────────────────┐
    │   ACTIVATE APPARATUS   │
    └────────────────────────┘
                │
                ▼           ⟋S102
    ┌────────────────────────┐
    │   SUPPLY POWER FROM     │
    │ SECOND DC POWER SUPPLY  │
    │  TO HEATER (STANBY MODE)│
    └────────────────────────┘
                │
                ▼           ⟋S103
           ◇────────────◇    YES
           │JOB RECEIVED?│─────────────┐
           ◇────────────◇              │
                │ NO                    ▼           ⟋S104
                ▼           ⟋S106   ┌────────────────────────┐
           ◇────────────◇   NO    │   SUPPLY POWER FROM     │
           │ TRANSITION TO│───────│ SECOND DC POWER SUPPLY TO│
           │POWER-SAVING  │       │  HEATER (DRIVING MODE)   │
           │    MODE?     │       └────────────────────────┘
           ◇────────────◇                    │           ⟋S105
                │ YES  ⟋S107                  ▼
                ▼               ┌────────────────────────┐
    ┌────────────────────────┐ │      EXECUTE JOB        │
    │   TRANSITION TO         │ └────────────────────────┘
    │ POWER-SAVING MODE       │
    └────────────────────────┘
                │
                ▼           ⟋S108
    ┌────────────────────────┐
    │   SUPPLY POWER FROM     │
    │ FIRST DC POWER SUPPLY   │
    │    TO HEATER            │
    │ (POWER-SAVING MODE)     │
    └────────────────────────┘
                │
                ▼           ⟋S109
           ◇────────────◇
     NO    │ TRANSITION TO│
    ───────│ STANDBY MODE?│
           ◇────────────◇
                │ YES  ⟋S110
                ▼
    ┌────────────────────────┐
    │   TRANSITION TO         │
    │   STANDBY MODE          │
    └────────────────────────┘
```

# FIG. 5

EP 4 607 284 A1

F I G. 6A

F I G. 6B

# FIG. 7

EP 4 607 284 A1

Europäisches
Patentamt

European
Patent Office

Office européen
des brevets

# EUROPEAN SEARCH REPORT

**Application Number**

EP 25 15 4053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/068204 A1 (KOIZUMI KAZUHISA [JP] ET AL) 9 March 2017 (2017-03-09) | 1,8-16 | INV.<br>G03G15/00 |
| Y | * paragraphs [0058] - [0147], [0204]; figures 2, 8, 10, 11 * | 2-7,17, 18 | G03G21/20 |
| | ----- | | |
| X | US 2010/232825 A1 (KAKITANI MASAKI [JP]) 16 September 2010 (2010-09-16) | 19,20 | |
| Y | * paragraphs [0050] - [0078]; figures 1a,1b * | 2,3,6 | |
| | ----- | | |
| Y | KR 2015 0015180 A (SAMSUNG ELECTRONICS CO LTD) 10 February 2015 (2015-02-10)<br>* abstract; figures * | 3,6,7, 17,18 | |
| | ----- | | |
| Y | JP 2012 008316 A (CANON KK) 12 January 2012 (2012-01-12)<br>* abstract; figures * | 3-7,17, 18 | |
| | ----- | | |

**TECHNICAL FIELDS SEARCHED (IPC)**

G03G

The present search report has been drawn up for all claims

| Place of search | Date of completion of the search | Examiner |
|---|---|---|
| Munich | 1 July 2025 | Urbaniec, Tomasz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 4053

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | | Publication date | Patent family member(s) | | Publication date |
|---|---|---|---|---|---|
| US 2017068204 | A1 | 09-03-2017 | NONE | | |
| US 2010232825 | A1 | 16-09-2010 | JP | 5355153 B2 | 27-11-2013 |
| | | | JP | 2010210990 A | 24-09-2010 |
| | | | US | 2010232825 A1 | 16-09-2010 |
| KR 20150015180 | A | 10-02-2015 | CN | 104345616 A | 11-02-2015 |
| | | | KR | 20150015180 A | 10-02-2015 |
| JP 2012008316 | A | 12-01-2012 | NONE | | |

EPO FORM P0459

For more details about this annex : see Official Journal of the European Patent Office, No. 12/82

**REFERENCES CITED IN THE DESCRIPTION**

**Patent documents cited in the description**

• JP 2007057779 A